# EUROPÄISCHE PATENTSCHRIFT

(11) **EP 1 736 339 B1**
(45) Veröffentlichungstag und Bekanntmachung des Hinweises auf die Patenterteilung: **09.02.2011**
(21) Anmeldenummer: 06012005.2
(22) Anmeldetag: 10.06.2006
(51) Int. Cl.: B60J 7/20

(54) **Cabriolet-Fahrzeug mit einem variablen Verdeckkasten**
Convertible with an adjustable roof storage compartment
Cabriolet avec un compartiment de toit variable

(30) Priorität: 20.06.2005 DE 102005028620
(43) Veröffentlichungstag der Anmeldung: 27.12.2006
(73) Patentinhaber: Wilhelm Karmann GmbH, 49084 Osnabrück (DE)
(72) Erfinder: Trost, Daniel, 49086 Osnabrück (DE); Imhoff, Christian, 49205 Hasbergen (DE); Könnecke, Marc, 49205 Hasbergen (DE)
(74) Vertreter: Kronthaler, Schmidt & Coll.

(56) Entgegenhaltungen:
- EP-A2- 0 356 640
- DE-A1- 10 131 886
- DE-C1- 19 541 168

## Beschreibung

Die Erfindung betrifft ein Cabriolet-Fahrzeug mit einem gegenüber einem Koffer- oder ähnlichem Gepäckraum durch eine variable Trennvorrichtung abteilbaren Verdeckkasten nach dem Oberbegriff des Anspruchs 1.

Aus der DE 195 41 168 C1 ist ein Cabriolet-Fahrzeug bekannt, bei dem eine Trennvorrichtung zwischen dem Kofferraum und dem Verdeckkasten drei aufeinander folgende, jeweils in sich starre plattenförmige Elemente umfaßt. Das in Fahrtrichtung vorderste und das hinterste Plattenteil sind jeweils karosserieseitig angelenkt; alle drei sind gegeneinander schwenkbar, so daß die drei Plattenteile mit den vier randseitigen und zwischenliegenden Gelenken ein Viergelenk bilden. Bei Krafteinleitung auf ein Plattenteil muß dieses die weiteren Plattenteile mitbewegen. Die Plattenteile müssen daher, da sie auch Druckkräfte übertragen, in sich formstabil und relativ voluminös und schwer ausgebildet sein. Zudem sind Gasdruckdämpfer zur Unterstützung der Bewegung vorzusehen. Somit ergibt sich eine große Zahl von Bauteilen, verbunden mit einem hohen Gewicht der Trennvorrichtung.

Die DE 101 31 886 A1 zeigt ein Cabriolet-Fahrzeug gemäß dem Oberbegriff des Anspruchs 1.

Der Erfindung liegt das Problem zugrunde, ein Cabriolet-Fahrzeug der genannten Art hinsichtlich einer variablen Trennvorrichtung zwischen Kofferraum und Verdeckkasten zu verbessern.

Die Erfindung löst dieses Problem durch ein Cabriolet-Fahrzeug mit den Merkmalen des Anspruchs 1. Vorteilhafte Ausgestaltungen des Gegenstandes der Erfindung ergeben sich aus den weiteren Ansprüchen 2 bis 11.

Mit der erfindungsgemäßen Lösung ist die Zahl der Bauteile dadurch verringerbar, daß zumindest ein Teil des Bodenteils in Doppelfunktion auch federndes Element ist und somit separate Federn eingespart werden können.

Eine hohe Kraftunterstützung in Richtung einer Extremstellung der Trennvorrichtung ist dabei insbesondere dann ermöglicht, wenn ein großflächiges Bauteil des Bodenteils insgesamt als ein oder mehrere Federelement(e) wirkt. Auch die Bruchgefahr eines Federelements ist dabei minimiert.

Auch konstruktiv ergibt sich eine große Vereinfachung, wenn der Bodenteil insgesamt als einstückiges, federndes Element nach Art einer Blattfeder ausgebildet ist.

Ein solches Bauteil kann einfach und trotz hoher Beanspruchbarkeit leicht aus z. B. extrudiertem ABS-Kunststoff gebildet sein.

Um zu vermeiden, daß das Federelement bei Bewegung der Trennvorrichtung aus der Verdeckaufnahmestellung heraus nach unten in eine nicht gewünschte Richtung einfedert, kann sehr vorteilhaft das Federelement in Richtung des Übergangs in die Gepäckaufnahmestellung vorgespannt sein und somit eine Wölbung leicht nach oben bei einer im wesentlichen horizontalen Lage aufweisen. Bei einer von hinten über den Rückwandteil ausgeübten Stauchung ist dann das Einbiegen des Federelements nur in einer Richtung möglich.

Es genügen mit dem einstückigen Boden- und Federteil und dem nach hinten anschließenden Rückwandteil genau zwei Plattenteile für die Trennvorrichtung, wodurch dessen Konstruktion vereinfacht ist.

Weitere Vorteile und Merkmale der Erfindung ergeben sich aus einem in der Zeichnung dargestellten und nachfolgend erläuterten Ausführungsbeispiel des Gegenstandes der Erfindung.

### In der Zeichnung zeigt:

- Fig. 1: eine seitliche schematische Ansicht eines vorne und hinten abgebrochenen Heckbereichs eines erfindungsgemäßen Cabriolet-Fahrzeugs bei eingestellter Gepäckaufnahmestellung der Trennvorrichtung,
- Fig. 2: eine seitliche Ansicht der Trennvorrichtung in einer Übergangsstellung zwischen Gepäck- und Verdeckaufnahmestellung,
- Fig. 3: eine ähnliche Ansicht wie Fig. 2 bei eingestellter Verdeckaufnahmestellung der Trennvorrichtung,
- Fig. 4: eine leicht perspektivische Ansicht von der linken Fahrzeugseite der Trennvorrichtung mit zusätzlich eingezeichneter flexibler seitlicher Verkleidung etwa in der Stellung nach Fig. 2,
- Fig. 5: eine ähnliche Ansicht wie Fig. 4 der Trennvorrichtung, jedoch etwa in der Stellung nach Fig. 3,

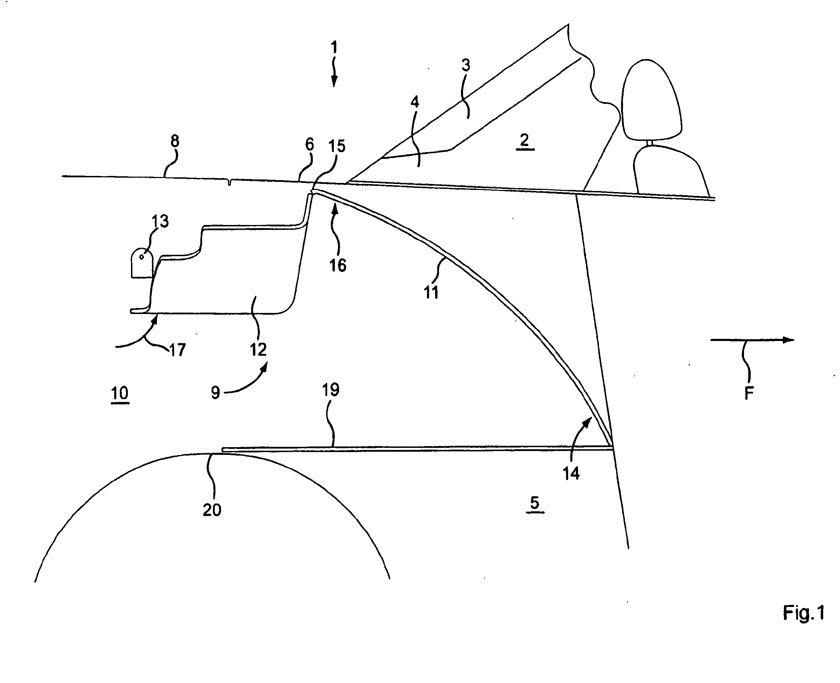

Das in Fig. 1 in seinem Heckbereich schematisch dargestellte Cabriolet-Fahrzeug 1 umfaßt ein bewegliches Dach 2, das teilweise oder vollständig aus starren Teilen bestehen kann oder auch außerhalb einer Heckscheibe 3 ganz mit einem flexiblen Bezug 4 versehen sein kann. Das Dach 2 ist in geöffneter Stellung in der Karosserie 5 - zum Beispiel unterhalb eines Deckelteils 6 - in einem Verdeckkasten 7 ablegbar. Das Deckelteil 6 kann - wie in Fig. 1 dargestellt - ein gegenüber einer Kofferraumklappe 8 separates Teil ausbilden oder - nicht gezeichnet - einteilig mit dieser ausgebildet sein.

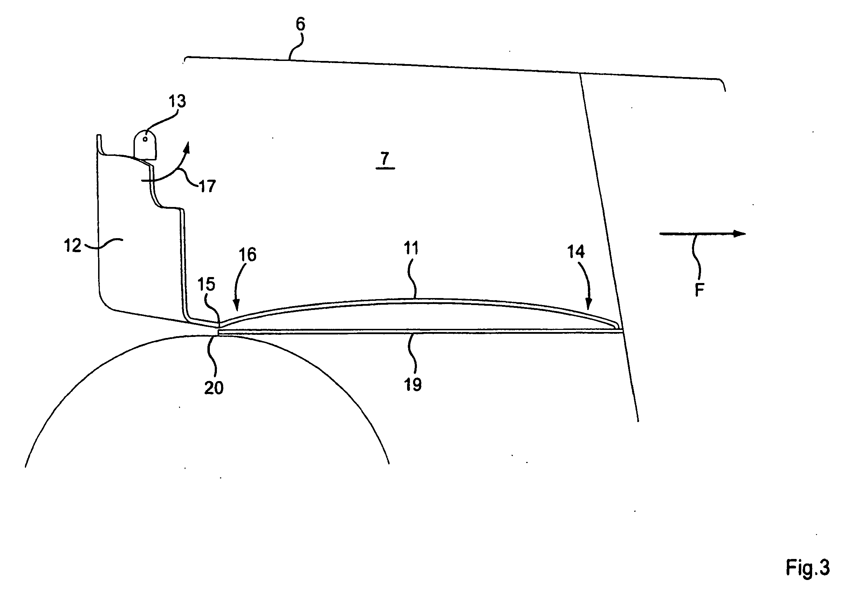

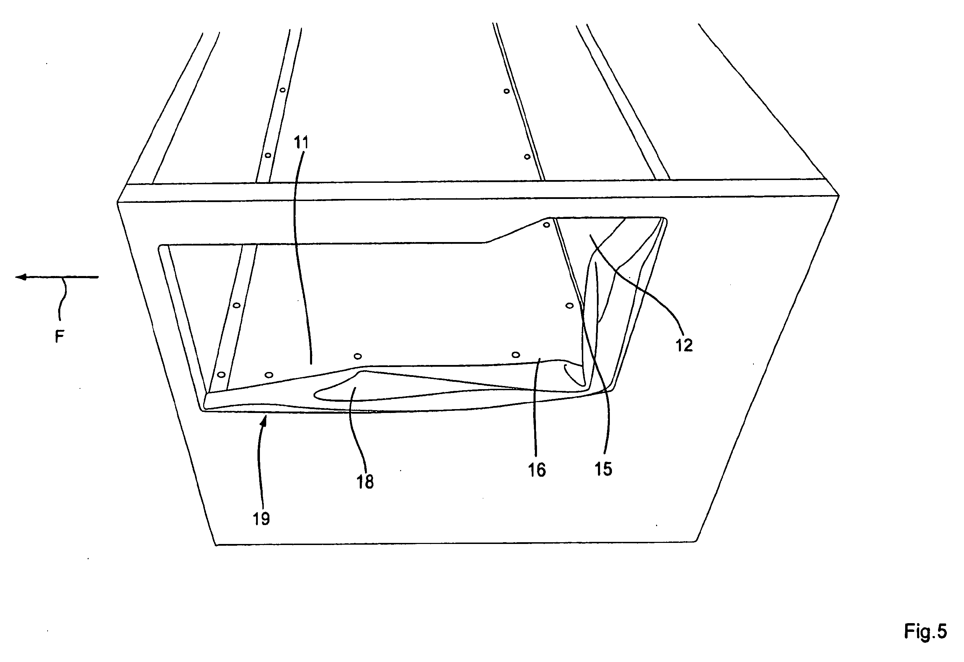

Der Verdeckkasten 7 ist über eine variable Trennvorrichtung 9 von einem Koffer- oder ähnlichem Gepäckraum 10 abgeteilt. Dadurch ist es möglich, für die sog. Verdeckaufnahmestellung, also die Stellung mit geöffnetem und im Verdeckkasten 7 abgelegtem Dach 2, den Verdeckkasten 7 auf Kosten der Größe des Kofferraums 10 zu maximieren (Fig. 3, Fig. 5) und umgekehrt in Gepäckaufnahmestellung bei geschlossenem Dach 2 den Kofferraum 10 zu Lasten des Verdeckkastens 7 zu maximieren (Fig. 1).

Die Trennvorrichtung 9 umfaßt im Ausführungsbeispiel einen im wesentlichen plattenförmigen Bodenteil 11, der hier als großflächiges und speziell einstückiges Bauteil aus einem ABS-Kunststoff hergestellt ist. Auch andere Materialien, wie etwa auch Schichtholz oder Metall, kommen in Betracht. Auch ist es nicht zwingend, daß der Bodenteil 11 einstükkig ist. Beispielsweise sind auch nebeneinander mehrere einzelne Elemente möglich, die von einer gemeinsamen flexiblen Verkleidung, zum Beispiel einer textilen Verkleidung, optisch überdeckt sind. Diese Elemente könnten einzeln federnd sein.

Hier ist der Bodenteil 11 insgesamt als durchgehendes Federelement nach Art einer Blattfeder ausgebildet.

Zudem umfaßt die Trennvorrichtung 9 einen ein- oder mehrstückigen Rückwandteil 12, der in Verdeckaufnahmestellung (Fig. 3) aufrecht steht, also gar nicht oder nur wenig (bis zu wenigen zehn Grad) gegen eine Vertikale geneigt ist und somit eine rückwärtige Abschlußwandung des Verdeckkastens 7 darstellt. Der Rückwandteil 12 ist mit seinem oberen Randbereich an der Karosserie 5 um eine horizontale Querachse 13 schwenkbar gehalten.

In einfachster Ausbildung umfaßt die Trennvorrichtung 9 mit dem Bodenteil 11 und dem Rückwandteil 12 daher nur zwei im wesentlichen plattenförmige Bauteile, die jeweils gelenkig miteinander und mit der Karosserie verbunden sind. Der Rückwandteil 12 kann zu seiner besseren Formstabilität auch mit Verstärkungsrippen oder ähnlichem versehen und muß nicht flach ausgebildet sein.

Der Bodenteil 11 ist mit seinem vorderen Ende 14 an der Karosserie 5 über eine karosseriefeste Schwenkachse und mit seinem rückwärtigen Ende 16 mit dem Rückwandteil 12 über eine zur ersten Achse parallele Schwenkachse 15 gehalten. Diese Achsen können zum Beispiel durch quer durchgehende Scharniere gebildet sein. In Verdeckaufnahmestellung liegen die vordere und hintere Schwenkachse 15 des Bodenteils 11 etwa auf gleicher Höhe, dieses liegt somit im wesentlichen horizontal. In Gepäckaufnahmestellung ist hingegen die hintere Schwenkachse 15 nach oben und vorne verlagert, so daß der Bodenteil 11 dann schräg nach hinten ansteigend gelegen ist.

In Verdeckaufnahmestellung ist der Bodenteil 11 zudem in Richtung des Übergangs zur Gepäckaufnahmestellung vorgespannt und dadurch bezüglich der Fahrzeuglängsrichtung leicht nach oben hin gewölbt, wohingegen er in Fahrzeugquerrichtung über jede Linie geradlinig verläuft. Die Vorwölbung läßt sich beispielsweise erreichen, wenn der Schwenkwinkel des Rückwandteils 12 entgegen dem Pfeil 17 derart begrenzt ist, daß der Bodenteil 11 nicht bis zu einer planebenen Lage entspannen kann.

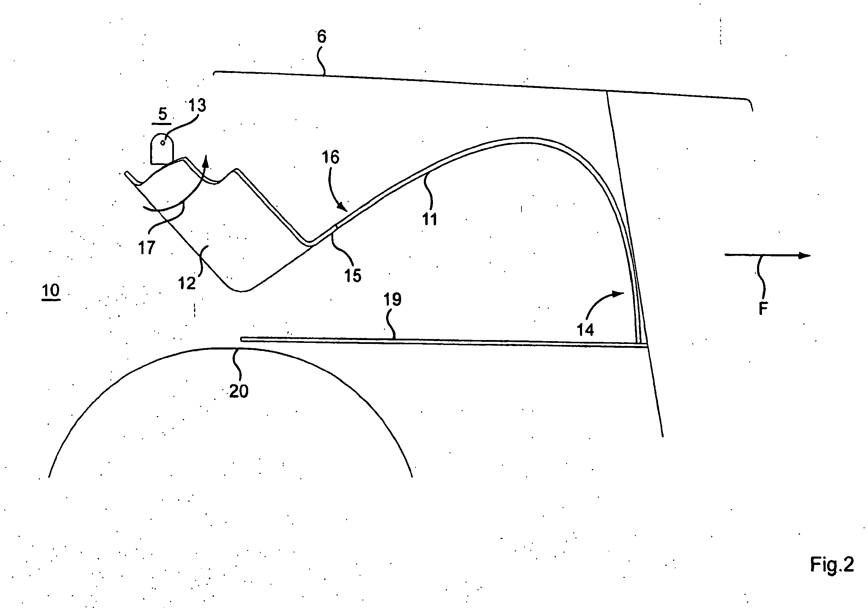

Zur Vergrößerung des Kofferraums bei nicht benötigtem Verdeckkasten 7 kann die Trennvorrichtung 9 aus der maximierten Stellung des Verdeckkastens 7 durch Einschwenken des Rückwandteils 12 nach vorne und oben in Richtung des Pfeils 17 zunächst gegen die Federkraft des Bodenteils 11 bewegt werden. Dabei wird eine Spannung in den Bodenteil 11 eingeleitet, so daß dieser über seine gesamte Breite bogenförmig deformiert wird und einen Bereich maximaler Spannung (etwa in der Darstellung nach Fig. 2) durchläuft, während er im weiteren zumindest teilweise entspannt und dadurch unterstützend in Richtung der Gepäckaufnahmestellung nach Fig. 1 wirkt.

Auch in dieser Endstellung zur Vergrößerung des Gepäckraums 10 bleibt die gleichsinnige Wölbung des Bodenteils 11 in verringertem Umfang erhalten, so daß dieses nie über die planebene Lage zu einer gegensinnigen Wölbung umschlägt. In Gepäckaufnahmestellung nach Fig. 1 ist daher durch die Eigenspannung im Bodenteil 11 eine Sicherung dieser oberen Lage erreicht, so daß auch dann eine zusätzliche Sicherung nicht zwingend ist. Sie kann jedoch vorhanden sein. In jedem Fall muß für die Wiederherstellung des maximierten Verdeckkastens 7 der Rückwandteil 12 entgegen dem Pfeil 17 - und damit zunächst entgegen der Federkraft - verschwenkt werden, ehe im letzten Teil der Bewegung die Federkraft wieder unterstützend wirkt.

Zur manuellen Bedienung durch den geöffneten Kofferraum 10 kann eine Durch- oder Eingriffsöffnung als Handgriff im Rückwandteil 12 vorgesehen sein. Auch eine automatisierte Betätigung kann mit entsprechenden Antriebs- und Steuerungsorganen möglich sein. Ebenso ist eine Sicherheitsabfrage möglich, die eine Dachöffnung nur in entsprechender Stellung der Trennvorrichtung 9 erlaubt.

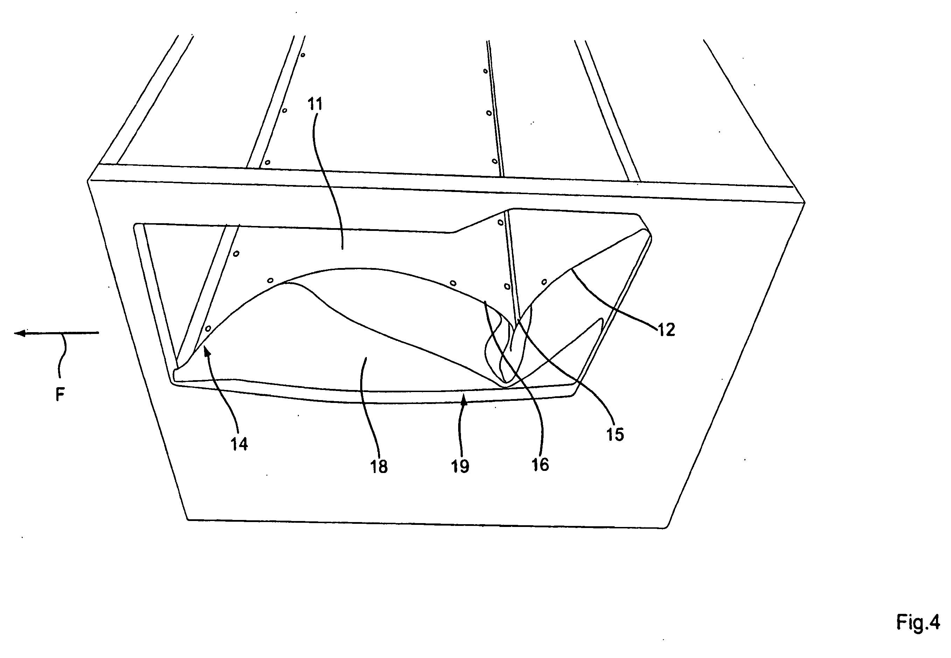

Der Verdeckkasten 7 kann zudem, wie in den Figuren 4 und 5 dargestellt ist, seitlich über deformierbare und gegenüber der Karosserie spannbare Verkleidungen 18 gedichtet werden. Diese erstrecken sich hier von einer karosseriefesten Halterung 19 etwa auf Höhe des Radhauses 20 zum Bodenteil 11 und dichten somit den Verdeckkasten 7 in Gepäckaufnahmestellung von unten ab. Die Halterungen 19 könnten auch weiter oben gelegen sein, so daß dann die Verkleidungen Seitenteile des aufgespannten Verdeckkastens 7 (Fig. 3) bilden würden.

## Patentansprüche

1. Cabriolet-Fahrzeug (1) mit einem in einem Verdeckkasten (7) im rückwärtigen Fahrzeugbereich ablegbaren Dach (2) oder Dachteil, wobei der Verdeckkasten (7) gegenüber einem angrenzenden Gepäckraum (10) durch eine variable Trennvorrichtung (9) abteilbar ist, die aus einer maximierten Verdeckaufnahmestellung des Verdeckkastens (7) in eine Gepäckaufnahmestellung, in der der Kofferraum (10) vergrößert ist, bewegbar ist und die zumindest einen unteren Bodenteil (11) umfaßt, und
der Bodenteil (11) zumindest über einen Teil seiner Erstreckung als Federelement(e) ausgebildet ist,
**dadurch gekennzeichnet, dass** das oder die Federelement(e) in Gepäckaufnahmestellung und in Verdeckaufnahmestellung eine gegenüber einer Zwischenstellung verminderte Spannung aufweist oder aufweisen.

2. Cabriolet-Fahrzeug nach Anspruch 1,
**dadurch gekennzeichnet,**
**daß** der Bodenteil (11) ein großflächiges Bauteil umfaßt, das insgesamt als Federelement ausgebildet ist.

3. Cabriolet-Fahrzeug nach Anspruch 2,
**dadurch gekennzeichnet,**
**daß** der Bodenteil (11) als einstückiges, federndes Bauteil ausgebildet ist.

4. Cabriolet-Fahrzeug nach einem der Ansprüche 2 oder 3,
**dadurch gekennzeichnet,**
**daß** der Bodenteil (11) nach Art einer Blattfeder ausgebildet ist.

5. Cabriolet-Fahrzeug nach einem der Ansprüche 2 bis 4,
**dadurch gekennzeichnet,**
**daß** der Bodenteil (11) nach Art aus einem ABS-Kunststoff besteht.

6. Cabriolet-Fahrzeug nach einem der Ansprüche 1 bis 5,
**dadurch gekennzeichnet,**
**daß** das Federelement (11) in Verdeckaufnahmestellung in Richtung der übergangsbewegung zur Gepäckaufnahmestellung vorgespannt ist.

7. Cabriolet-Fahrzeug nach einem der Ansprüche 1 bis 6,
**dadurch gekennzeichnet,**
**daß** das Federelement (11) zur Einstellung vorderseitig um eine horizontale Achse schwenkbar an der Fahrzeugkarosserie (5) und rückseitig um eine horizontale Achse (15) schwenkbar im unteren Bereich des Rückwandteils (12) festgelegt ist, der seinerseits zur Bewirkung der Gepäckaufnahmestellung vorwärts und aufwärts schwenkbar (17) ist.

8. Cabriolet-Fahrzeug nach einem der Ansprüche 1 bis 7,
**dadurch gekennzeichnet,**
**daß** der Bodenteil (11) in Verdeckaufnahmestellung eine im wesentlichen horizontale und in Gepäckaufnahmestellung eine schräg nach hinten ansteigende Lage einnimmt.

9. Cabriolet-Fahrzeug nach einem der Ansprüche 1 bis 8,
**dadurch gekennzeichnet,**
**daß** die Bewegung der Trennvorrichtung (9) zwischen Gepäck- und Verdeckaufnahmestellung manuell durch Bewegung des Rückwandteils (12) bewirkbar ist.

10. Cabriolet-Fahrzeug nach einem der Ansprüche 1 bis 9,
**dadurch gekennzeichnet,**
**daß** seitlich an dem Bodenteil (11) deformierbare und gegenüber der Karosserie (5) spannbare Verkleidungen (18) vorgesehen sind.

11. Cabriolet-Fahrzeug nach einem der Ansprüche 1 bis 10,
**dadurch gekennzeichnet,**
**daß** die Trennvorrichtung (9) genau zwei bewegliche und im wesentlichen plattenförmige Teile (11;12) umfaßt.

## Claims

1. A convertible car (1) with a roof (2) or roof part that is depositable in a top compartment (7) in the rear portion of the vehicle, wherein the top compartment (7) is separable from an adjacent luggage trunk (10) via a variable partitioning device (9), which is movable from a maximized top receiving position of the top compartment (7) to a luggage receiving position in which the luggage trunk (10) is enlarged, and which comprises at least a lower bottom portion (11), and
the bottom part (11) is formed as spring element(s) at least over a part of its extension,
**characterized in that** the spring element(s) in the luggage receiving position and in the top receiving position has/have a decreased tension compared to an intermediate position.

2. The convertible car according to claim 1,
**characterized in that**
the bottom part (11) comprises a large-area member, which is altogether formed as a spring element.

3. The convertible car according to claim 2,
**characterized in that**
the bottom part (11) is formed as a one piece resilient member.

4. The convertible car according to one of claims 2 or 3,
**characterized in that**
the bottom part (11) is formed like a leaf spring.

5. The convertible car according to one of claims 2 to 4,
**characterized in that**
the bottom part (11) is made of ABS-plastic.

6. The convertible car according to one of claims 1 to 5,
**characterized in that**,
the spring element (11) in its top receiving position is biased in the direction of the transition movement towards the luggage receiving position.

7. The convertible car according to one of claims 1 to 6,
**characterized in that**,
the spring element (11) for adjustment on the front side is arranged pivotable around a horizontal axis at the vehicle body (5) and, on the rear side, is arranged pivotable around an horizontal axis (15) in the lower portion of the back wall part (12), which itself is pivotable (17) forwardly and upwardly for effectuating the luggage receiving position.

8. The convertible car according to one of claims I to 7,
**characterized in that**
the bottom part (11) is in a substantially horizontal position in the top receiving position and in an inclined, rearward ascending position in the luggage receiving position.

9. The convertible car according to one of claims 1 to 8,
**characterized in that**
the movement of the partitioning device (9) between luggage receiving position and top receiving position can be effected manually by moving the back wall part (12).

10. The convertible car according to one of claims 1 to 9,
**characterized in that**
deformable coverings (18), which are tensible against the car body (5), are provided on the side of the bottom part.

11. The convertible car according to one of claims 1 to 10,
**characterized in that**
the partitioning device (9) comprises exactly two movable and substantially plate-shaped parts (11,12).

## Revendications

1. Véhicule de type cabriolet (1) comprenant un toit (2) ou une partie de toit rabattable dans un logement de capote (7) dans la zone arrière du véhicule, dans lequel le logement de capote (7) peut être séparé d'un coffre à bagages adjacent (10) par un dispositif de séparation variable (9), qui peut être déplacé d'une position de réception de capote maximisée du logement de capote (7) à une position de réception de bagages, dans laquelle le coffre à bagages (10) est agrandi, et qui comprend au moins une partie de fond inférieure (11), et
la partie de fond (11) se présente, au moins sur une partie de son extension, sous la forme d'élément(s) à ressort,
**caractérisé en ce que**
le ou les éléments à ressort présente(nt), dans la position de réception de bagages et dans la position de réception de capote, une tension réduite par rapport à une position intermédiaire.

2. Véhicule de type cabriolet selon la revendication 1, **caractérisé en ce que**
la partie de fond (11) comprend un composant de grande surface qui se présente sous la forme d'un élément à ressort.

3. Véhicule de type cabriolet selon la revendication 2, **caractérisé en ce que**
la partie de fond (11) se présente sous la forme d'un composant élastique d'un seul tenant.

4. Véhicule de type cabriolet selon l'une quelconque des revendications 2 ou 3,
**caractérisé en ce que**
la partie de fond (11) est conçue selon le type d'un ressort à lames.

5. Véhicule de type cabriolet selon l'une quelconque des revendications 2 à 4,
**caractérisé en ce que**
la partie de fond (11) est constituée selon le type d'un matériau synthétique ABS.

6. Véhicule de type cabriolet selon l'une quelconque des revendications 1 à 5,
**caractérisé en ce que**
l'élément à ressort (11) est précontraint en position de réception de capote dans la direction du mouvement de transition vers la position de réception de bagages.

7. Véhicule de type cabriolet selon l'une quelconque des revendications 1 à 6,
**caractérisé en ce que**
l'élément à ressort (11) est fixé, pour le réglage, côté avant, à pivotement autour d'un axe horizontal sur la carrosserie (5) du véhicule et, côté arrière, à pivotement autour d'un axe horizontal (15) dans la zone inférieure de la partie de paroi arrière (12), qui peut à son tour pivoter (17) vers l'avant et vers l'arrière pour atteindre la position de réception de bagages.

8. Véhicule de type cabriolet selon l'une quelconque des revendications 1 à 7,
**caractérisé en ce que**
la partie de fond (11) adopte une position sensiblement horizontale en position de réception de capote et une position montant en biais vers l'arrière en position de réception de bagages.

9. Véhicule de type cabriolet selon l'une quelconque des revendications 1 à 8,
**caractérisé en ce que**
le mouvement du dispositif de séparation (9) entre une position de réception de bagages et une position de réception de capote peut être déclenché manuellement par mouvement de la partie de paroi arrière (12).

10. Véhicule de type cabriolet selon l'une quelconque des revendications 1 à 9,
**caractérisé en ce que**
il est prévu des habillages (18) qui peuvent être déformés latéralement sur la partie de fond (11) et être tendus par rapport à la carrosserie (5).

11. Véhicule de type cabriolet selon l'une quelconque des revendications 1 à 10,
**caractérisé en ce que**
le dispositif de séparation (9) comprend exactement deux parties (11; 12) mobiles et sensiblement en forme de plaque.
